# EUROPÄISCHE PATENTSCHRIFT

(11) **EP 2 523 838 B1**
(45) Veröffentlichungstag und Bekanntmachung des Hinweises auf die Patenterteilung: **20.05.2015**
(21) Anmeldenummer: 10777006.7
(22) Anmeldetag: 12.11.2010
(51) Int. Cl.: B60T 8/36, F16K 31/06

(54) **MAGNETVENTIL MIT EINER KERNHÜLSE UND VERFAHREN ZU DEREN VERSCHWEISSUNG**
MAGNETIC VALVE HAVING A CORE SLEEVE AND METHOD FOR WELDING THEREOF
SOUPAPE MAGNÉTIQUE MUNIE D'UNE DOUILLE CENTRALE ET PROCÉDÉ DE SOUDAGE DE LADITE DOUILLE

(30) Priorität: 11.01.2010 DE 102010000771
(43) Veröffentlichungstag der Anmeldung: 21.11.2012
(73) Patentinhaber: Robert Bosch GmbH, 70442 Stuttgart (DE)
(72) Erfinder: GUGGENMOS, Harald, 87509 Immenstadt/Seifen (DE); DINERMAN, Michael, 74074 Heilbronn (DE); WENZEL, Andreas, 87448 Waltenhofen-Oberdorf (DE); FOERCH, Dirk, 74196 Neuenstadt/Stein (DE); SCHULLA, Manfred, 87561 Oberstdorf (DE)
(86) Internationale Anmeldenummer: PCT/EP2010/067350
(87) Internationale Veröffentlichungsnummer: WO 2011/082869

(56) Entgegenhaltungen:
- EP-A1- 1 083 372
- WO-A1-2007/033855
- DE-A1- 4 030 971
- JP-A- 2009 195 948
- US-A1- 2009 283 707

## Beschreibung

Die Erfindung betrifft ein Magnetventil mit einer Kernhülse, in der ein Ventilglied längs verschieblich angeordnet ist, und mit mindestens einer die Kernhülse überfangenden Gehäusehülse, die mittels von außen erfolgender Schweißung mit der Kernhülse verbunden ist.

### Stand der Technik

Ein Magnetventil der gattungsgemäßen Art ist beipielsweise bekannt aus der DE 40 30 971 A1. Bei diesem bekannten Magnetventil handelt es sich bei der Schweißung z.B. um Schweißpunkte, so dass eine schweißfreie Zone zwischen den Schweißpunkten ausgebildet ist.

Ein Magnetventil mit Kernhülse und Gehäusehülse ist ferner bekannt aus der US 2009/283707 A1.

Beispielsweise als Steuer- und Regelventile in hydraulischen Einrichtungen, beispielsweise Bremssystemen von Kraftfahrzeugen, werden derartige Magnetventile verwendet.

### Offenbarung der Erfindung

In der erfindungsgemäßen Ausführungsform ist vorgesehen, dass in der schweißfreien Zone der Radialabstand zwischen Kernhülse und Gehäusehülse größer als in mindestens einer angrenzenden, die Schweißung aufweisenden geschweißten Zone ist. In diesen Ausführungsformen ist es möglich, eine zuverlässige Verschweißung von Kernhülse und Gehäusehülse auszubilden, ohne dass durch den Energieeintrag in die Gehäusehülse in Bereichen, in denen der Radialabstand zwischen Kernhülse und Gehäusehülse größer als nur ganz geringfügig ist, eine unerwünschte thermische Belastung oder gar eine Beeinträchtigung bis hin zur Zerstörung der Gehäusehülse, beispielsweise durch Durchbrennen, erfolgt. Solche größeren Radialabstände sind beispielsweise dann erforderlich, wenn eine Umspülung der Kernhülse mit einem von dem Magnetventil geschalteten Medium erforderlich ist, oder wenn Durchmesserreduzierungen zur Formanpassung, beispielsweise zum Zwecke der Führung der Kernhülse, gewünscht sind. Eine solche Durchmesserreduzierung kann in einer bloßen Abweichung von beispielsweise einer kreisrunden Querschnittsform liegen, beispielsweise in Form einer Abplattung, oder aber auch eine dezidierte, eingebrachte Nut in beliebiger Richtung, bevorzugt in Axialrichtung. Je nach Anordnung des vergrößerten Radialabstandes ist es beispielsweise auch möglich, schweißfreie Zonen und Schweißungen nicht auf derselben Axialhöhe anzuordnen, sondern beispielsweise in unterschiedlicher Axialhöhe oder auf mehreren Axialhöhen, betrachtet auf die Axialerstreckung der Gehäusehülse.

Bevorzugt ist die Schweißung als Laserschweißung ausgebildet, also in solcher Art und Weise, dass die Schweißung mittels einer Laserschweißvorrichtung von außen erfolgt.

Weitere vorteilhafte Ausführungsformen ergeben sich aus dem Unteranspruch und aus der nachfolgenden Beschreibung.

Die Erfindung wird nachfolgen anhand eines Ausführungsbeispiels näher erläutert, ohne aber hierauf beschränkt zu sein.

Es zeigen
- Figur 1: eine Darstellung eines Magnetventils in teilweisem Längsschnitt und
- Figur 2: einen Querschnitt durch das Magnetventil im Bereich der Schweißung.

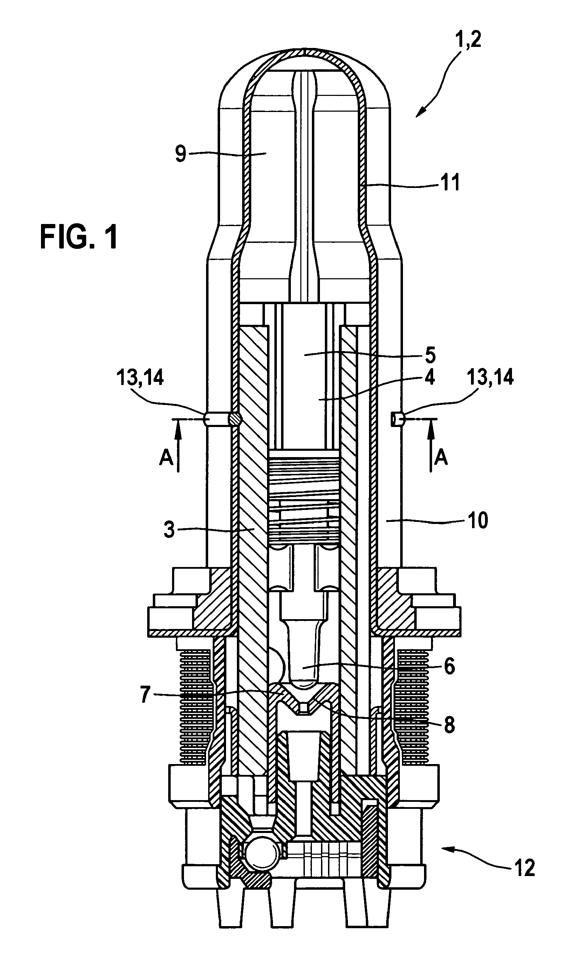

Figur 1 zeigt ein Magnetventil 1, nämlich ein stromlos geöffnetes, sogenanntes Einlassventil 2. Das Magnetventil 1 weist eine Kernhülse 3 auf, in der ein Ventilglied 4 längsverschieblich angeordnet ist, und wobei das Ventilglied 4 als Magnetanker 5 mit einem endseitigen Ventilstößel 6 ausgebildet ist, der mit einem in einem Ventilkörper 7 axial in Radialrichtung mittig angeordneten Ventilsitz 8 zum Öffnen und Schließen des Magnetventil 1 zusammenwirkt. Der Magnetanker 5 wird hierbei von einem bezogen auf den Magnetanker 5 dem Ventilstößel 6 gegenüberliegend am Magnetanker angeordneten Polkern 9 betätigt, der von einem hier nicht dargestellten Spulenkörper eines Elektromagneten zumindest bereichsweise übergriffen wird, und der der Einleitung von Magnetkraft zur Betätigung des Magnetankers 5 und damit des Ventilstößels 6 zur Freigabe oder zum Sperren eines Volumenstroms eines nicht dargestellten Mediums im Magnetventil 1 dient. Zur Abdichtung nach außen ist das Magnetventil von einem Gehäuse 10 umgeben, das im Bereich der Kernhülse 3 von einer Gehäusehülse 11 und im in Axialerstreckung betrachteten Bereich etwa des Ventilstößels 6 mit der Gehäusehülse verbundenen Gehäuseabschluss 12 zum Einbau des Magnetventils 1 in einen nicht dargestellten Ventilblock versehen ist. Zur druckfesten Festlegung der Gehäusehülse 11 auf der Kernhülse 3 ist im Bereich der Schnittlinie A-A eine Schweißung 13 angebracht, die als Laserschweißung 14 von außen nach Überstülpen der Gehäusehülse 11 über die Kernhülse 3 ausgeführt ist. Mittels der Schweißung 13 wird die Gehäusehülse 11 mit der Kernhülse 3 in der dargestellten Position verschweißt.

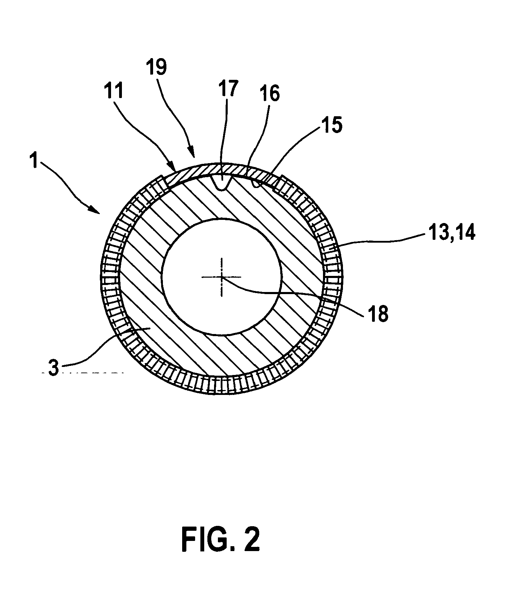

Figur 2 zeigt das Magnetventil 1 im Querschnitt im Bereich der in Figur 1 dargestellten Schnittlinie A-A. Die Gehäusehülse 11 umgreift die Kernhülse 3, wobei eine Gehäusehülseninnenwand 15 einer Kernhülsenaußenwand 16 mit sehr geringem Abstand oder bevorzugt in unmittelbarer Berührlage gegenüberliegt. In Axialrichtung ist, in 12-Uhr-Position dargestellt, eine Nut 17 in die Kernhülse 3, nämlich in die Kernhülsenaußenwand 16 radial nach innen zu einem Zentrum 18 weisend, eingebracht. Zwischen Gehäusehülse 11 und Kernhülse 3 ist, etwa im Bereich zwischen 1-Uhr-Position und 11-Uhr-Position, die Schweißung 13 von außen als Laserschweißung 14 angebracht, so dass Kernhülse 3 und Gehäusehülse 11 in diesem Bereich miteinander verschweißt sind. Zwischen etwa 11-Uhr-Position und 1-Uhr-Position ist, den Bereich der Nut 17 gewissermaßen auslassend, eine schweißfreie Zone 19 ausgebildet. Im Bereich der schweißfreien Zone 19 erfolgt kein Energieeintrag auf die Gehäusehülse 11 (die Laserschweißung erfolgt von außen durch die Gehäusehülse 11 hindurch, unter thermischer Einwirkung auf die Kernhülse 3). Auf diese Weise wird eine thermische Beschädigung, insbesondere ein Durchbrennen, der Gehäusehülse 11 im Bereich der Abweichung der Kernhülse 3 von der Innengeometrie der Gehäusehülse 11 im Bereich der Schnittebene A-A, insbesondere also im Bereich der Nut 17, sehr vorteilhaft vermieden.

## Patentansprüche

1. Magnetventil (1) mit einer Kernhülse (3), in der ein Ventilglied (4) längs verschieblich angeordnet ist, und mit mindestens einer die Kernhülse (3) überfangenden Gehäusehülse (11), die mittels von außen erfolgender Schweißung (13) mit der Kernhülse (3) verbunden ist, wobei die Schweißung (13) über einen Umfangsabschnitt oder mehrere Umfangsabschnitte der Gehäusehülse (11) unter Ausbildung mindestens einer schweißfreien Zone (19) ausgebildet ist, **dadurch gekennzeichnet, dass** in der schweißfreien Zone (19) der Radialabstand zwischen Kernhülse (3) und Gehäusehülse (11) größer als in mindestens einer angrenzenden, die Schweißung (13) aufweisenden geschweißten Zone ist.

2. Magnetventil (1) nach Anspruch 1, **dadurch gekennzeichnet, dass** die Schweißung (13) als Laserschweißung (14) ausgebildet ist.

## Claims

1. Solenoid valve (1) having a core sleeve (3), in which a valve element (4) is arranged so as to be longitudinally displaceable, and having at least one housing sleeve (11), which covers the core sleeve (3) and is connected to the core sleeve (3) by welding (13) performed from the outside, wherein the welding (13) is formed over a circumferential portion or multiple circumferential portions of the housing sleeve (11), forming at least one weld-free zone (19), **characterized in that** the radial gap between the core sleeve (3) and the housing sleeve (11) in the weld-free zone (19) is greater than in at least one adjoining welded zone having the welding (13).

2. Solenoid valve (1) according to Claim 1, **characterized in that** the welding (13) takes the form of laser welding (14).

## Revendications

1. Soupape magnétique (1) comprenant une douille centrale (3) dans laquelle un organe de soupape (4) est disposé de manière mobile longitudinalement, et comprenant au moins une douille de boîtier (11) recouvrant la douille centrale (3), laquelle douille de boîtier est reliée à la douille centrale (3) au moyen d'une soudure (13) effectuée depuis l'extérieur, la soudure (13) étant formée sur une portion périphérique ou sur plusieurs portions périphériques de la douille de boîtier (11) en formant au moins une zone (19) exempte de soudure, **caractérisée en ce que**, dans la zone (19) exempte de soudure, la distance radiale entre la douille centrale (3) et la douille de boîtier (11) est supérieure à celle dans au moins une zone soudée adjacente comprenant la soudure (13).

2. Soupape magnétique (1) selon la revendication 1, **caractérisée en ce que** la soudure (13) est formée en tant que soudure au laser (14).
